Europäisches Patentamt

European Patent Office

Office européen des brevets

(11) Publication number: **0 226 364**
**A2**

(12) **EUROPEAN PATENT APPLICATION**

(21) Application number: **86309267.2**

(22) Date of filing: **27.11.86**

(51) Int. Cl.⁴: **H04Q 11/04**

(30) Priority: **13.12.85 CA 497599**

(43) Date of publication of application:
**24.06.87 Bulletin 87/26**

(84) Designated Contracting States:
**AT DE FR GB NL SE**

(71) Applicant: **NORTHERN TELECOM LIMITED**
**600 de La Gauchetiere Street West**
**Montreal Quebec H3B 4N7(CA)**

(72) Inventor: **Chow, Peter El Kwan**
**7 Calais Court**
**Nepean Ontario, K2E 7E1(CA)**

(74) Representative: **Crawford, Andrew Birkby et al**
**A.A. THORNTON & CO. Northumberland**
**House 303-306 High Holborn**
**London WC1V 7LE(GB)**

(54) A method of operating a telecommunication switching system or the like.

(57) A method of operating a digital telecommunication switching system (100) or the like. The method includes the steps of a) synchronizing the switch matrix bus (102) framing with the input bus (101) and the output bus (104); b) switching the digital signals, from timeslots in a first frame of the input bus (101) to timeslots in a second frame of the output bus (102) such that all the digital signals from the first frame are switched to the second frame; and c) switching in time the digital signals, carried in timeslots on the outgoing bus (102), to achieve a predetermined ordering of said digital signals. This single stage constant delay time switch can be cascaded to form a digital telecommunication variable bandwidth switching system.

EP 0 226 364 A2

# A METHOD OF OPERATING A TELECOMMUNICATION SWITCHING SYSTEM OR THE LIKE

This invention relates generally to digital telecommunication switching systems or the like and more particularly to a method of operating such a system so as to provide variable bandwidth.

Switching systems for telephone subscribers are well known. The basic idea behind such a system is to interconnect the transmission paths between subscribers so as to allow communication beween those subscribers. Examples of existing switching systems or networks can be found in the following U.S. patents, to which attention is directed: 4,470,139 by E.A. Munter; 4,450,557 by E.A. Munter; 4,123,624 by R. Gagnier et al; and 3,851,105 by A. Regnier et al.

The above-mentioned switching systems were designed to work with standard PCM (Pulse Code Modulated) signals. As time advances, people are wanting to transmit information of a different sort than what those switching systems were originally designed to handle.

One example of a new use is to transmit data and a parity check. The data is sent as an eight-bit signal in one timeslot (of a T1 carrier) and the parity check corresponding to that data is sent as an eight-bit signal in the immediately following timeslot. If no switching is involved then no problems appear.

However, as soon as any time switching of those signals occurs, the relationship between the data and parity signals can no longer be assured. That is, one cannot be sure that the timeslot immediately following the timeslot carrying the data contains the parity information corresponding to that data.

This application of point to point service is described in more detail in Technical Advisory No. 68, dated April 1981 by AT&T wherein it is referred to as 56 KB Dataports and to which attention is directed. There are other wide bandwidth signals such as 15 KHz audio signals which require six timeslots. In the future, more transmission of signals having differing bandwidth requirements is expected.

Various methods have been devised to overcome this problem. One method has been to divide a frame into two sections. For example, a frame having 24 timeslots may be divided into the first 12 timeslots (i.e. 1 to 12) and into the last 12 timeslots (i.e. 13 to 24). Signals that must maintain a special relationship, one with another, are then carried by timeslots 1 to 12 (first group) and these are carefully controlled to ensure that no mis-ordering of the signals occurs. The remainder of the timeslots (i.e. second group, 13 to 24) are then treated in a conventional manner.

One problem with such an approach is that it is difficult to choose a good compromise between the number of timeslots in the first and second groups. Too many timeslots in the first group and the circuits that rely on conventional switching may become busy and blocked; and vice versa. In situations where more than two timeslots are required to transmit a given signal, the problem will be compounded.

## Summary of the Invention

The present invention is directed to a method of operating switching systems so as to alleviate the above-referenced problems. In short, the present invention overcomes the problems of the prior art by a) synchronizing the bus framing of the input bus, the output bus and, the buses of the switching stages; b) switching the digital signals, at each time switch of the system, from timeslots in a first frame to timeslots in a second frame such that all the digital signals from the first frame are switched to the second frame; and c) switching in time the digital signals, within a given frame, carried in timeslots on the outgoing bus, to achieve a predetermined relative ordering of said digital signals.

In other words, each time switch in the system is controlled so as to ensure that all signals that arrive in a given frame stay within a corresponding frame after time switching. That is, signals from a given frame are not separated into two different frames in the switching process. This of course means that each time switch in the system must have the capacity to store two frames of data.

After all the switching has taken place the signals are applied to the output bus of the switching system. At this point in time they may very well be out of order, as with any other switching systems. However, while they may be out of order, they have maintained their frame relationship (since this was a constraint applied to operating the switching system). It then becomes a relatively straightforward chore to put the signals appearing within the frame into the appropriate order using a time switch. Note that this ordering can be done by an additional time switch or by the last stage of time switching in the switching system.

Stated in other terms, the present invention is a method of operating a switching system for switching digital signals carried in timeslots on at least one incoming bus, to timeslots on at least one outgoing bus wherein said switching system comprises at least one constant frame delay switch, said method comprising the step of: switching the digital signals, at each constant frame delay switch, from timeslots in a first frame to timeslots in a second frame, such that all the signals from the first frame are switched to the second frame.

Brief Description of the Drawings

The invention will now be described in more detail with reference to the accompanying drawings, wherein like parts in each of the several figures are identified by the same reference character, and wherein:

Figure 1 (comprising parts a and b) is a simplified symbolic representation of two frames of a T1 carrier useful in understanding the present invention;

Figure 2 (comprising parts a and b) is a simplified symbolic representation of several frames of a T1 carrier useful in understanding the present invention;

Figure 3 (comprising parts a and b) is a simplified symbolic representation of several frames of a T1 carrier depicting one application of the present invention;

Figure 4 (comprising parts a, b, and c) is a simplified symbolic representation of several frames of a T1 carrier during the switching process according to the present invention;

Figure 5 is a simplified block diagram of a time switch suitable for use with the present invention;

Figures 6a, 6b, and 6c are simplified overall block diagrams depicting switching systems suitable to be operated according to the present invention;

Figure 7 depicts a simplified block diagram of one application of the present invention; and

Figure 8 depicts a simplified block diagram of another application of the present invention.

Detailed Description

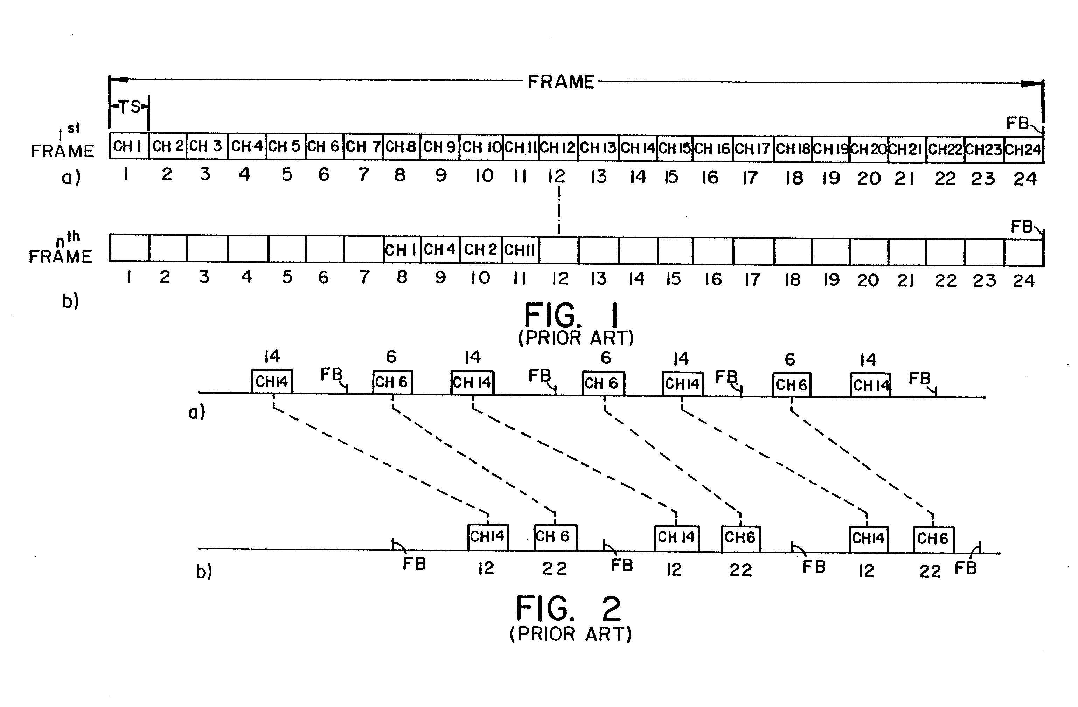

Figure 1, having parts a and b, depicts two frames of a T1 carrier. T1 carriers are well known and so will be discussed only briefly to give some background for the present invention. A T1 frame is depicted in Figure 1a as it might look when the frame is originated. It contains 24 timeslots numbered 1 to 24 and carries the information from 24 channels referenced as CH1 to CH24; it has a framing bit referenced as FB. In Figure 1a there is a direct correspondence between timeslot number and channel number; i.e. timeslot 1 carries CH1 information, timeslot 2 carries CH2 information, etc.

Figure 1b depicts the T1 frame of Figure 1a as it might look after it has undergone one or more stages of time switching. Note that the timeslots 1 to 24 are as before (in Figure 1a), but the channels are organized differently. Channel 1 (CH1) now appears in timeslot 8, channel 4 (CH4) now appears in timeslot 9, etc. There is no correspondence between channel numbers and timeslot numbers, and the channels themselves are no longer in any particular order. Note that all the channel numbers have not been depicted in Figure 1b.

Figure 2, having parts a and b, is a simplified symbolic representation of how the channels of a T1 carrier input to a time switch are altered in time relative to the channels of the T1 carrier on the output of the time switch.

Figure 2a depicts two channels (CH6 and CH14) on timeslots 6 and 14 respectively as they are applied to the input of a time switch (not shown). Figure 2a depicts three full frames of data, and the framing bits are indicated by the reference characters FB.

Figure 2b depicts the two channels (CH6 and CH14) of Figure 2a after they have been switched in time. It can be seen from Figure 2a that channel 14 (CH14) now appears in timeslot 12 of a subsequent frame and channel 6 (CH6) now appears in timeslot 22. Note that the data that was in a common frame in Figure 2a appears in two different frames in Figure 2b. In short, both the timing and the relative order of channels 6 and 14 have been changed. This is of course normal operation for time switches.

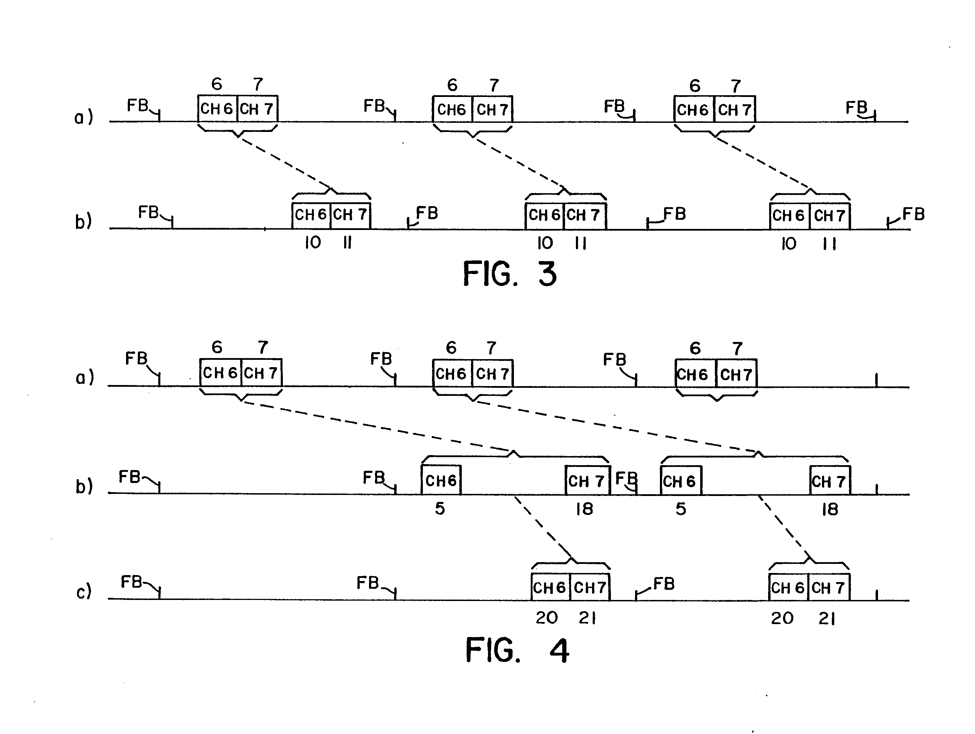

As stated earlier, one desideratum for time switches is to be able to group certain channels together, prior to switching, and to have them still grouped together when the switching process is finished. Figure 3, having parts a and b, depicts symbolically this requirement.

Figure 3a depicts several frames of a TDM bus prior to time switching. The two channels of interest, CH6 and CH7 are depicted appearing in timeslots 6 and 7. It should be noted that the channels appear in two adjacent timeslots and in a given order (i.e. CH6 on the left, and CH7 on the right.

Figure 3b depicts the two channels (CH6 and CH7) of Figure 3a after they have been switched in time. Note that while they now occupy different timeslots (i.e. timeslots 10 and 11) they are still in adjacent timeslots, they still have the same given order, and they have remained within the same corresponding frame. The present invention is directed to achieving this goal regardless of how many stages of time switching are involved.

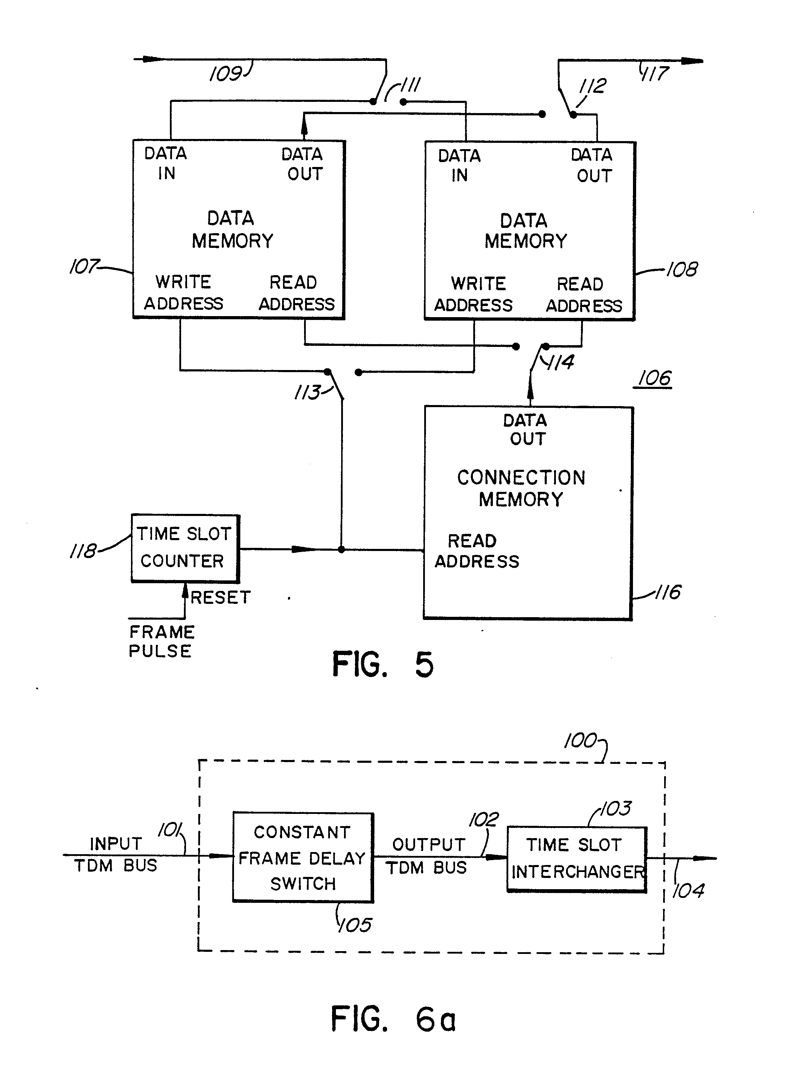

Figure 4, having parts a, b, and c, is a simplified symbolic representation of how the method of the present invention accomplishes this. Figure 4 should be studied in conjunction with Figure 6a which is a simplified block diagram of a system for implementing the present invention. Figure 6a depicts a switching system 100. Switching system 100 includes a constant frame delay switch 105 having an input TDM (Time Division Multiplex) bus 101 and an output TDM bus 102.

Figure 4a depicts the signals appearing on input TDM bus 101 (of Figure 6a). Only two channels are depicted in Figure 4a, namely channels 6 and 7, in timeslots 6 and 7 respectively; only three complete frames are shown in Figure 4a.

Figure 4b depicts the signals appearing on output TDM bus 102 (of Figure 6a). Once again, only channels 6 and 7 are depicted, appearing now in timeslots 5 and 18, respectively. Note that the horizontal distances in Figure 4 are not to scale, but that the framing bits FB are coincident as shown in parts a, b, and c. That is, when a framing bit FB appears on input bus 101, a framing bit FB appears at the same time on output bus 102, etc.

It will be noted that the signals on output bus 102, as depicted in Figure 4b, are not in the required arrangement; they have kept their same relative order (i.e. channel 6 on the left and channel 7 on the right) but they now are separated by twelve timeslots.

Because of the constraint of operating switch 105 such that all the channels that are input in a given frame remain within that given frame, it now becomes a relatively straightforward matter to rearrange the channels within a given frame to reach the desired goal. Note that a switch operated in the fashion of switch 105, (i.e. a) synchronizing the bus framing of the input bus, the output bus, and the buses of the switching stages; and b) switching the digital signals, at each time switch of the system, from timeslots in a first frame to timeslots in a second frame such that all the digital signals from the first frame are switched to the second frame) is referred to as a constant frame delay switch. Switch 105 may be a single stage time switch. The combination of switch 105 (i.e. constant frame delay switch) and timeslot interchanger 103 is referred to as a constant delay switch. Consequently, in Figure 6a, the combination of constant frame delay switch 105 and timeslot interchanger 103, as depicted, is a constant delay switch (i.e. switching system 100 is a constant delay switch).

Timeslot interchanger 103 (Figure 6a) performs the chore of rearranging the channels within a given frame. The output of interchange 103 is applied to TDM bus 104 and is depicted in simplified form in Figure 4c. In Figure 4c it can be seen that channels 6 and 7 are adjacent one another and in the same order as they were on input TDM bus 101 (Figure 4a). Channels 6 and 7 now appear in timeslots 20 and 21 of bus 104. Note that timeslot interchanger 103 is but a time switch.

Time switches are well known and will therefore not be described in great detail. However, to ensure a complete disclosure, Figure 5 depicts in simplified block diagram form, a time switch 106 suitable for use both in switch 105 (Figure 6a) and as time slot interchanger 103 (Figure 6a).

Note that while a separate timeslot interchanger 103 has been shown in Figure 6a, the last time switching stage of constant frame delay switch 105 can also perform this function. Thus timeslot interchanger 103 is not essential, but can be used, and has been included herein to simplify the description of the present invention. The appended claims are intended to cover both the situation where a separate timeslot interchanger 103 exists and the situation where that function is provided by the last time switch of switch 105.

Time switch 106 (Figure 5) is comprised of two data memories 107 and 108 which themselves are each comprised of sufficient RAM (Random Access Memory) to store one complete frame of data from input TDM bus 109; i.e. data memory 107 has sufficient storage capacity to store one complete frame of data from bus 109, and data memory 108 has sufficient storage capacity to store one complete frame of data from bus 109.

Switches 111, 112, 113 and 114 (shown as single pole double throw (SPDT) switches) are preferably solid state switched and are operated approximately in unison and change position - (toggle) at the beginning of each frame. As a result, the first frame of data on bus 109 passes through switch 111 and is applied to data memory 107 under control of time counter 118 via switch 113. While this is occurring, the data stored in data memory 108 is being applied to output TDM bus 117 via switch 112. Data memory 108 is under the control of connection memory 116 (which is comprised of RAM) via switch 14.

At the end of the frame, switches 111, 112, 113, and 114 all toggle to their other position, and the data stored in data memory 107 is applied to output bus 117 while the data received on input bus 109 is stored in data memory 108. This process repeats for successive frames. The timing for connection memory 116 is provided by timeslot counter 118.

While a typical time switch has been described in Figure 5 and while the exact time switch used is not critical (as long as it can meet the criterion of keeping channels originating in a frame within that frame) the preferred switch for this application is the switch described and claimed in aforementioned U.S. patent No. 4,450,557 by Ernst A. Munter.

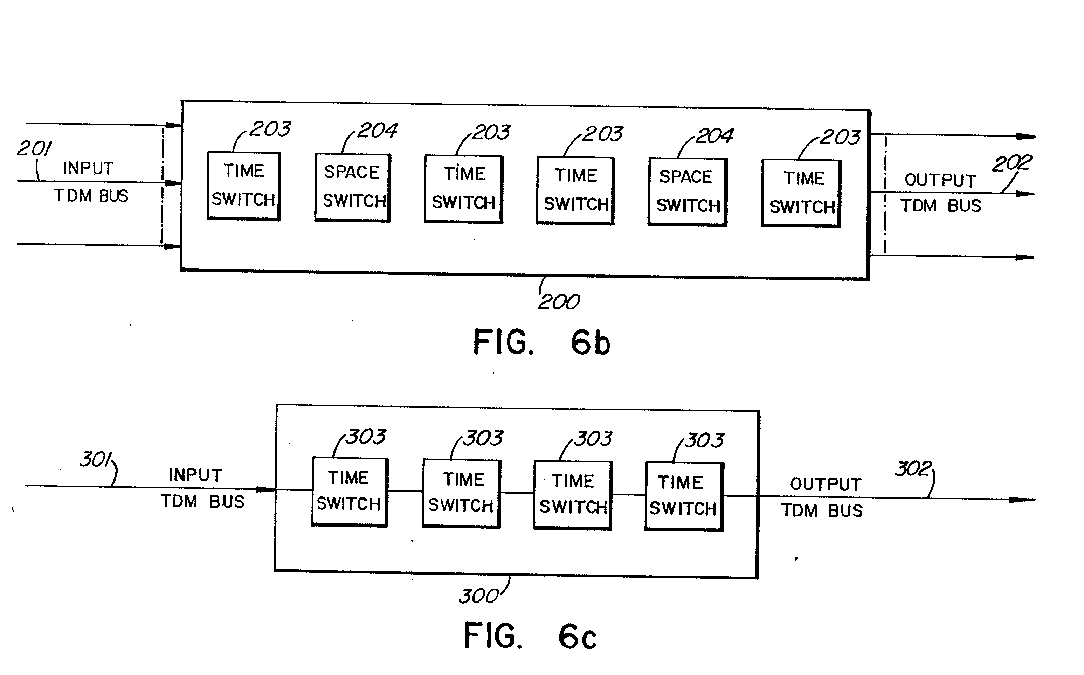

Figure 6b depicts, in simplified fashion, a block diagram of a switching system 200, suitable to be used in lieu of switching system 100 of Figure 6a. Note that switching system 200 is comprised of an interconnected combination of time swtches 203 and space switches 204, and has an input TDM bus 201 and an output TDM bus 202.

Figure 6a depicts, in simplified fashion, a block diagram of a switching system 300, suitable to be used in lieu of switching system 100 of Figure 6a. Note that switching system 300 is comprised entirely of time switches 303 and has an input TDM bus 301 and an output TDM bus 302.

Note that in Figure 6c the time switched 303 of switching systems 300 can be the switch of the aforementioned U.S. patent no. 4,450,557 by Ernst A. Munter. The switch of U.S. patent No. 4,450,557 (as is mentioned in that patent) has the characteristics of both a time switch and of a space switch. Depending upon how the switch is implemented, switching system 300 can have more input buses 301 and more output buses 302 than depicted.

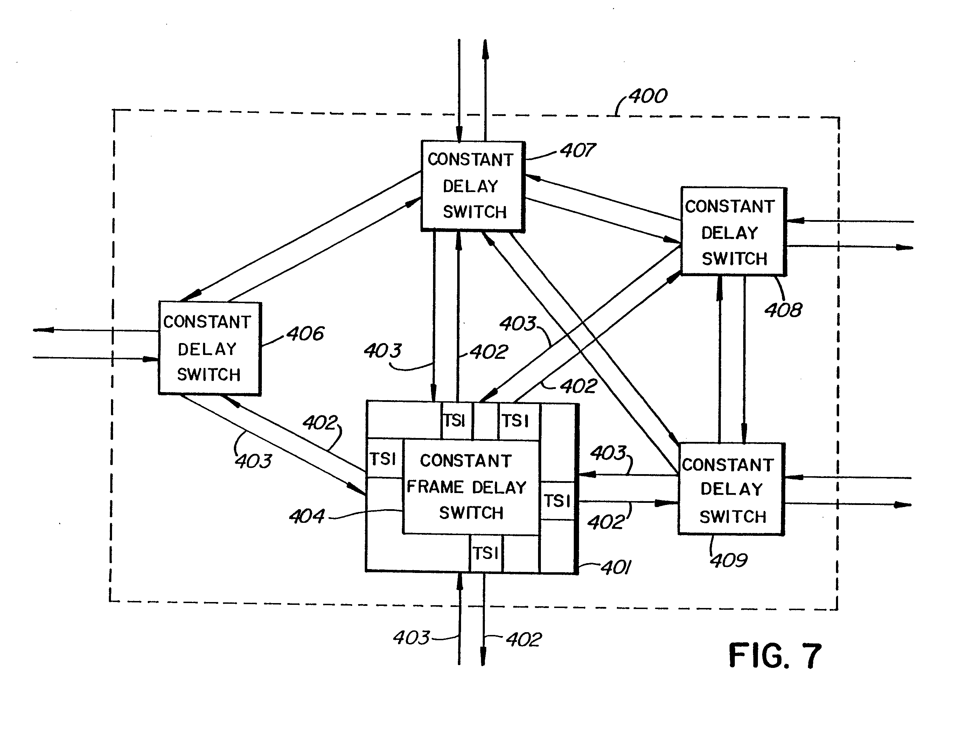

Figure 7 depicts a simplifies switching system 400 illustrating one application of the present invention. Constant delay switch 401 is illustrated as a constant frame delay switch 404 having a timeslot interchanger (TSI) for each trunk or bus 402 leaving switch 401. Incoming trunks or buses 403 are applied directly to switch 404. Constant delay switches 406, 407, 408, and 409 are constructed in a similar manner to constant delay switch 401.

Note that switches 401, 406, 407, 408, and 409 can be in geographically diverse locations. As an example, switch 401 might be situated in Kingston, Ontario, switch 406 in Toronto, Ontario, switch 407 in Ottawa, Ontario, switch 408 in Montreal, Quebec, and switch 409 in Brockville, Ontario. While switching system 400 works, it does provide delays which are compounded at each switch. If we have an interconnected switching system, such as we have with system 400 of Figure 7, we can improve upon it by reducing some of the delays.

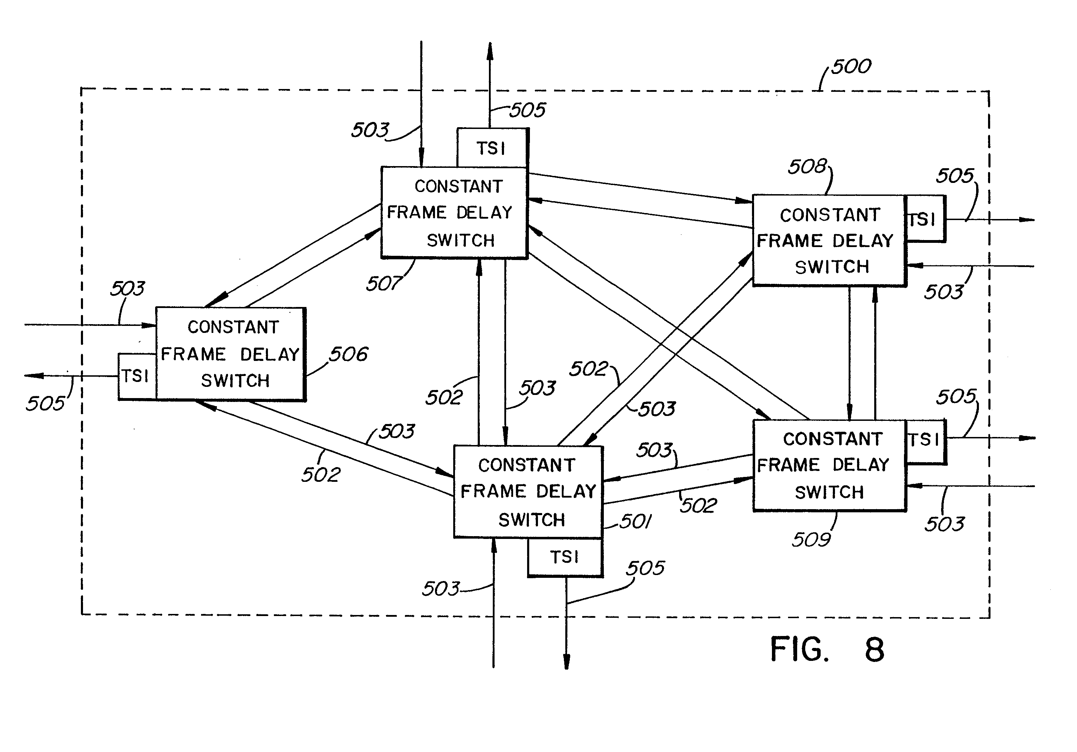

Figure 8, depicting switching system 500, depicts an improved system with fewer delays. Note that within system 500 only constant frame delay switches 501, 506, 507, 508, and 509 are used. In particular, for a bus that goes between two switches within system 500 (e.g. buses 502 and 503 between switches 501 and 507) the time slot interchanger TSI is not used. It is only when a bus 505 exits system 500 that a timeslot interchanger TSI is required. For example, a timeslot interchanger TSI is used between constant frame delay switch 501 and output bus 505. This results in less time delay within switching system 500 (Figure 8) than with switching system 400 (Figure 7). Note that switches 501, 506, 507, 508, and 509 may also be geographically distributed as were the switches of system 400. Note also that switches 501, 506, 507, 508, and 509 may be single stage time switches.

## Claims

1. A method of operating a switching system (100) for switching digital signals carried in timeslots on at least one incoming bus (101), to timeslots on at least one outgoing bus (102) wherein said switching system comprises at least one constant frame delay switch (105), said method comprising the step of:
switching said digital signals, at each said constant frame delay switch (105), from timeslots in a first frame to timeslots in a second frame, such that all the signals from said first frame are switched to said second frame.

2. The method of claim 1 wherein said at least one constant frame delay switch (105) is one single stage time switch (106).

3. The method of claim 1 wherein said at least one constant frame delay switch (105) is one single stage time switch (106), said at least one incoming bus (101) is two in number, and said at least one outgoing bus (102) is two in number.

4. A method of operating a switching system (100) for switching digital signals carried in timeslots on at least one incoming bus (101), to timeslots on at least one outgoing bus (102), wherein said switching system comprises at least one constant frame delay switch (105), said method comprising the steps of:
switching said digital signals, at each said constant frame delay switch (105), from timeslots in a first frame to timeslots in a second frame, such that all the signals from said first frame are switched to said second frame; and
timeslot interchanging the digital signals, within a given frame, for each bus (104) leaving said switching system (100).

5. The method of claim 4 wherein said at least one constant frame delay switch (105) is one single stage time switch.

6. The method of claim 4 wherein said at least one constant frame delay switch (105) is one single stage time switch, said at least one incoming bus (101) is two in number, and said at least one outgoing bus (102) is two in number.

7. A method of operating a switching system (200) for switching digital signals carried in timeslots on at least one incoming bus (201), to timeslots on at least one outgoing bus (202) wherein said switching system (200) comprises a plurality of cascaded switching networks (203,204), said method comprising the step of:

switching said digital signals, at each said network (203) that involves time switching, from timeslots in a first frame to timeslots in a second frame, such that all the signals from said first frame are switched to said second frame.

8. The method of claim 7 further including the step of switching in time within a given frame, said digital signals carried in timeslots on said at least one outgoing bus, to achieve a predetermined ordering of said digital signals.

9. The method of claim 7 further including the step of switching in time, in the final time switch - (203) of said switching system (200), said digital signals to achieve a predetermined ordering of said digital signals on said at least one outgoing bus - (202).

10. The method of claim 7 further including the step of synchronizing the bus framing of said at least one incoming bus (201), said at least one outgoing bus (202) and, the buses of said cascaded switching networks.

11. The method of claim 8 further including the step of synchronizing the bus framing of said at least one incoming bus (201), said at least one outgoing bus (202) and, the buses of said cascaded switching networks.

12. The method of claim 9 further including the step of synchronizing the bus framing of said at least one incoming bus (201), said at least one outgoing bus (202) and, the buses of said cascaded switching networks.

13. A method of operating a switching system - (200) for switching digital signals carried in timeslots on at least one incoming bus (201) to timeslots on at least one outgoing bus (202) wherein said switching system comprises a plurality of cascaded switching networks (203, 204), said method comprising the steps of:

a) synchronizing the bus framing of said at least one incoming bus (201), said at least one outgoing bus (202) and, the buses of said cascaded switching networks;

b) switching said digital signals, at each said network (203) that involves time switching, from timeslots in a first frame to timeslots in a second frame, such that all the signals from said first frame are switched to said second frame; and

c) switching in time said digital signals, within a given frame, for each said at least one outgoing bus (202), to achieve a predetermined relative ordering of said digital signals.

14. The method of claim 13 wherein each said switching network (203, 204) is a time switch (203).

15. The method of claim 13 wherein each said switching network (203, 204) is either a space switch (204) or a time switch (203).

16. The method of claim 13 wherein said switching networks (203, 204) include networks that exhibit the characteristics of both time switches and space switches.

17. The method of claim 13 wherein the bus framing is synchronized such that each said switching network (203, 204) begins a new frame at approximately the same time.

18. A method of operating a switching system - (300) comprised of a plurality of cascaded time switches (303) for switching digital signals carried in timeslots on an incoming bus (301) to timeslots on an outgoing bus (302), said method comprising the steps of:

a) synchronizing the bus framing of said incoming bus (301), said outgoing bus (302) and, the buses of said cascaded time switches (303);

b) switching said digital signals, at each said time switch (303), from timeslots in a first frame to timeslots in a second frame, such that all the digital signals from said first frame are switched to said second frame; and

c) timeslot interchanging the digital signals, within a given frame, destined for said outgoing bus (302), to achieve a predetermined relative ordering of said digital signals.

19. The method of claim 18 wherein said predetermined relative ordering is to keep a group of digital signals having a particular ordering sequence on said incoming bus (301) to retain that same relative ordering sequence after having passed through said switching system.

20. The method of claim 18 wherein said particular ordering sequence on said incoming bus - (301) is a group of digital signals carried in adjacent timeslots, and having a particular sequence within that group.

21. The method of claim 20 wherein said group of digital signals is two in number and said group is carried in two consecutive timeslots.

22. The method of claim 18 further including the step of storing, at each said time switch (303), digital signals for at least the time period of two frames.

23. A method of operating a switching system - (300) comprised of a plurality of cascaded time switches (303) each said time switch for switching digital signals carried in timeslots on an incoming bus (301) to timeslots on an outgoing bus (302), said method comprising at each said time switch the steps of:

a) synchronizing the bus framing of said incoming bus (301), said outgoing bus (302), and said time switch (303);

b) switching said digital signals, at each said time switch (303), from timeslots in a first frame to timeslots in a second frame, such that all the digital signals from said first frame are switched to said second frame; and

c) timeslot interchanging the digital signals, within a given frame, for said outgoing bus (302), to achieve a predetermined relative ordering of said digital signals.

24. The method of claim 23 wherein said predetermined relative ordering is to keep a group of digital signals having a particular ordering sequence on said incoming bus to retain that same relative ordering sequence after having passed through said switching system (300).

25. The method of claim 23 wherein said particular ordering sequence on said incoming bus is a group of digital signals carried in adjacent timeslots, and having a particular sequence within that group and each said time switch (303) is one single stage time switch.

FIG. 1
(PRIOR ART)

FIG. 2
(PRIOR ART)

0 226 364

FIG. 3

FIG. 4

0 226 364

FIG. 5

FIG. 6a

0 226 364

FIG. 6b

FIG. 6c

FIG. 7

0 226 364

FIG. 8